# EUROPÄISCHE PATENTSCHRIFT

(11) **EP 3 784 900 B1**
(45) Veröffentlichungstag und Bekanntmachung des Hinweises auf die Patenterteilung: **23.02.2022**
(21) Anmeldenummer: 19717845.2
(22) Anmeldetag: 11.04.2019
(51) Int. Cl.: F02M 63/00, F02M 47/02

(54) **KRAFTSTOFFINJEKTOR**
FUEL INJECTOR
INJECTEUR DE CARBURANT

(30) Priorität: 26.04.2018 DE 102018206504
(43) Veröffentlichungstag der Anmeldung: 03.03.2021
(73) Patentinhaber: Robert Bosch GmbH, 70442 Stuttgart (DE)
(72) Erfinder: TUERKER, Oezguer, 70839 Gerlingen (DE); HERRERA, Mario, 74343 Sachsenheim (DE); WACHTER, Philipp, 70439 Stuttgart-Stammheim (DE); OLEMS, Lars, 70374 Stuttgart (DE); FISCHER, Fabian, 70176 Stuttgart (DE); FISCHER, Daniel, 70563 Stuttgart (DE)
(86) Internationale Anmeldenummer: PCT/EP2019/059232
(87) Internationale Veröffentlichungsnummer: WO 2019/206657

(56) Entgegenhaltungen:
- EP-A1- 2 218 903
- WO-A1-2017/202540
- DE-A1-102006 021 735
- DE-A1-102007 027 486
- DE-A1-102012 220 031

## Beschreibung

### Stand der Technik

Die Erfindung betrifft einen Kraftstoffinjektor mit den Merkmalen des Oberbegriffs des Anspruchs 1.

Ein gattungsgemäßer Kraftstoffinjektor ist aus der DE 10 2012 220 031 A1 der Anmelderin bekannt. Die im Bereich zwischen einem Ventilelement und einem Ventilkörper eines Steuerventils des Kraftstoffinjektors ausgebildete Geometrie weist zwei ringnutförmige Vertiefungen auf, die beim Öffnen des Ventilelements zum Abströmen von Kraftstoff aus einem Steuerraum in einen Niederdruckbereich des Kraftstoffinjektors von dem Kraftstoff durchströmt werden. WO2017202540 A1 offenbart auch ein Kraftstoffinjektor.

Durch eine geeignete Wahl der Geometrie des Ventilelements und des Ventilstücks soll bei einem derartigen Kraftstoffinjektor insbesondere ein gleichmäßiges Öffnungs- bzw. Schließverhalten des Kraftstoffinjektors über die Ansteuerdauer hinweg auch bei unterschiedlichen Systemdrücken bzw. Drücken im Steuerraum erzielt werden. Bei Untersuchungen hat es sich herausgestellt, dass insbesondere bei mittleren Rail- bzw. Systemdrücken (gemeint sind hierbei Drücke von beispielsweise etwa 1200 bar) es durch strömungstechnische Effekte zu einer nichtkonstanten Schließdauer des Steuerventils kommt. Dieser Effekt lässt sich durch kollabierende Dampfgebiete und durch zurückreflektierte Druckwellen erklären, die auf das Ventilelement Kräfte erzeugen, die es in seiner (Schließ-) Bewegung stören. Eine unabhängig von dem jeweiligen Rail- bzw. Systemdruck möglichst konstante Schließdauer des Ventilelements ist allerdings Voraussetzung für eine hohe Einspritzmengengenauigkeit, insbesondere bei kurzen, zeitlich dicht aufeinanderfolgenden Einspritzungen.

### Offenbarung der Erfindung

Der erfindungsgemäße Kraftstoffinjektor mit den Merkmalen des Anspruchs 1 hat den Vorteil, dass durch eine strömungstechnische Optimierung des Steuerventils eine von dem jeweiligen Rail- bzw. Systemdruck und der Ansteuerdauer nahezu unabhängige, konstante Schließdauer des Ventilelements am Steuerventil erzielt werden kann. Dadurch ergibt sich insbesondere bei zeitlich dicht aufeinanderfolgenden Einspritzungen bei mittleren Drücken eine erhöhte Einspritzmengengenauigkeit. Dies wiederum ermöglicht wiederum eine Optimierung des Betriebs einer Brennkraftmaschine im Sinne beispielsweise möglichst geringer Emissionen.

Zur strömungstechnischen Optimierung des Steuerventils schlägt es die Lehre des Anspruchs 1 vor, dass die (zweite) ringnutförmige Vertiefung an dem Ventilstück auf der einer Sitzfläche am Ventilstück zugewandten Seite von einer radial umlaufenden Kante begrenzt ist, die eine kegelförmige Seitenwand der (zweiten) ringnutförmigen Vertiefung mit einer radial innerhalb der Kante verlaufenden kegelförmigen Sitzfläche verbindet, dass im Übergangsbereich zwischen der Seitenwand und der Sitzfläche ein Kantenwinkel von weniger als 130 Grad ausgebildet ist, und dass der Durchmesser im Bereich der Kante maximal 120 % des Durchmessers im Bereich des Ventilssitzes beträgt.

Unter einer ringnutförmigen Vertiefung im Zusamenhang mit der Erfindung wird eine Vertiefung verstanden, die eine Längsachse des Steuerventils radial umgibt und die von einem radial inneren und einem radial äußeren Wandabschnitt begrenzt ist, die sich in axialer Richtung der Längsachse betrachtet vom Grund der Vertiefung erstrecken bzw. oberhalb des Grunds verlaufen. Insbesondere kann es sich bei der ringnutförmigen Vertiefung um eine Vertiefung in Art einer Mulde bzw. um eine muldenartigen Vertiefung handeln.

Ein minimaler Kantenwinkel von weniger als 130 Grad im Zusammenhang mit einer möglichst scharfen Kante mit minimaler Verrundung sorgen dafür, dass die Strömung sich nicht an der Kontur des Ventilstücks, sondern eher an der Kontur des Ventilelements an der entsprechenden Stirnfläche des Ventilelements anlegt. Dadurch wird die Strömung stärker verwirbelt und nicht direkt in den Absteuerpfad gelenkt.

Allgemein ausgedrückt schlägt es die Lehre der Erfindung vor, die störenden Einflüsse auf die Bewegung des Ventilelements zu reduzieren bzw. das Ventilelement besser vor derartigen Einflüssen abzuschirmen. Dies wird dadurch erreicht, dass durch mehrere Strömungsumlenkungen und engere Querschnitte in Richtung zum Niederdruckbereich des Kraftstoffinjektors der Einfluss von reflektierten Druckwellen reduziert wird. Gleichzeitig wird die Dampfphase am Ventilstück und somit unterhalb des Ventilelements durch eine gezielte Verwirbelung der Absteuerströmung stabilisiert, sodass der Dampf während der Hubbewegung des Ventilelements weniger zum Kollabieren neigt. Weiterhin wird durch den Dampf unterhalb der Stirnfläche des Ventilelements die Übertragung von Druckwellen auf das Ventilelement gedämpft.

Erfindungsgemäß ist es vorgesehen, dass die erste ringnutförmige Vertiefung an dem Ventilelement eine kegelförmige Fläche aufweist, dass das Ventilelement zum Ausbilden eines Ventilsitzes mit der Sitzfläche einen Flächenabschnitt aufweist, der in die Fläche übergeht, dass zwischen dem Flächenabschnitt und der Fläche ein stumpfer Winkel ausgebildet ist, so dass sich der Abstand zwischen den beiden ringnutförmigen Vertiefungen in radialer Richtung von einer Längsachse des Ventilelements betrachtet vergrößert, und dass die kegelförmige Fläche auf der einem Ventilsitz am Ventilelement abgewandeten Seite in einen konkav ausgebildeten Bereich übergeht. Die konkave Kontur verstärkt die Verwirbelung und somit die stabilere Dampfphase und die Umlenkung weg von dem Absteuerpfad.

Vorteilhafte Weiterbildungen des erfindungsgemäßen Kraftstoffinjektors sind in den Unteransprüchen aufgeführt. In bevorzugter Weiterbildung des zuletzt gemachten Vorschlags ist es vorgesehen, dass der konkav ausgebildete Bereich in eine radial umlaufende, ebene Ventilstirnfläche übergeht, und dass ein Kantenwinkel im Übergangsbereich zwischen der Ventilstirnfläche und dem konkav ausgebildeten Bereich weniger als 130 Grad beträgt.

Besonders bevorzugt ist weiterhin es, wenn der stumpfe Winkel zwischen dem Flächenabschnitt und der Fläche am Ventilelement mehr als 150Grad beträgt. Diese Maßnahme sorgt dafür, dass die Strömung, nachdem sie den Ventilsitz passiert hat, dazu gezwungen wird, sich an die Stirnfläche des Ventilelements und nicht an die Fläche des Ventilstücks anzulegen.

In einer fertigungstechnisch aufwendiger zu realisierenden, jedoch aus strömungstechnischer Sicht optimierten Ausgestaltung des Steuerventils ist es vorgesehen, dass die erste ringnutförmige Vertiefung an dem Ventilelement radial außerhalb eines Dichtsitzes und radial im Bereich der zweiten ringnutförmigen Vertiefung eine konkav ausgebildete Fläche aufweist, die auf der dem Dichtsitz radial abgewandten Seite in eine radial umlaufende Ventilstirnkante übergeht.

Eine bevorzugte geometrische Ausgestaltung sieht vor, wenn die Ventilstirnfläche oder die Ventilstirnkante sich in Richtung einer Längsachse des Ventilelements betrachtet auf derselben Höhe befindet wie ein Dichtsitz im Bereich des Ventilsitzes.

Eine weitere Optimierung des Strömungsverhaltens lässt sich erzielen, wenn am Ventilstück ein Führungsfreistich mit einem Freistichdurchmesser ausgebildet ist, der maximal 10 % oder 0,2 mm größer ist als der Durchmesser im Bereich eines Führungsabschnitts für das Ventilelement. Eine derartige konstruktive Ausgestaltung mit einer Engstelle zwischen dem Ventilsitz und dem Absteuerpfad hindert reflektierte Druckwellen von außen am Eindringen in die (zweite) muldenartige Vertiefung des Ventilstücks. Zudem wird die Verwirbelung unterhalb des Ventilelements stabilisiert.

Eine weitere vorteilhafte Ausgestaltung des Ventilelements sieht vor, dass dieses im Bereich des Führungsfreistichs eine radial umlaufende Wand aufweist, die auf der der Stirnseite des Ventilelements zugewandten Seite über eine möglichst klein ausgebildete Fase in die Stirnseite des Ventilelements übergeht. Die Fase bewirkt insbesondere eine Vereinfachung des Montageprozesses beim Einführen des Ventilelements in das Ventilstück.

Zusätzlich ist es zur strömungstechnischen Optimierung vorgesehen, dass an dem Ventilstück mehrere, vorzugsweise wenigstens drei, in gleichmäßigen Winkelabständen um die Längsachse des Ventilelements bzw. des Ventilstücks angeordnete Radialbohrungen ausgebildet sind, und dass die Radialbohrungen in Richtung einer Längsachse des Ventilelements betrachtet bei geschlossenem Ventilelement oberhalb der Stirnseite des Ventilelements an dessen radial äußerem Bereich angeordnet sind. Eine derartige, möglichst weit oben bzw. in Richtung des Elektromagneten angeordnete Positionierung der Radialbohrungen im Zusammenhang mit einer möglichst geringen axialen Überdeckung mit der Fase am Ventilelement bewirkt eine stärke Umlenkung des abströmenden Kraftstoffs, sodass die Strömung weniger direkt in die Absteuerbohrung gelenkt und die Verwirbelung unterhalb des Ventilelements stabilisiert wird. Auch wird durch mehrere, im Querschnitt relativ kleine Radialbohrungen eine homogenere Strömungsverwirbelung erreicht.

Das Ventilelement ist bevorzugt Teil eines Magnetankers, wobei der Magnetanker eine Längsbohrung aufweist, in der ein der radialen Führung des Magnetankers dienender Führungsstift angeordnet ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Längsschnitt durch einen Teilbereich eines erfindungsgemäßen Kraftstoffinjektors,
- Fig. 2: einen Ausschnitt aus dem Kraftstoffinjektor gemäß Fig. 1 im Bereich seines Steuerventils in vergrößerter Darstellung bei einer ersten konstruktiven Gestaltung und
- Fig. 3: eine Darstellung entsprechend der Fig. 2 bei einer zweiten konstruktiven Gestaltung.

Gleiche Bauteile bzw. Bauteile mit gleicher Funktion sind in den Figuren mit den gleichen Bezugsziffern versehen.

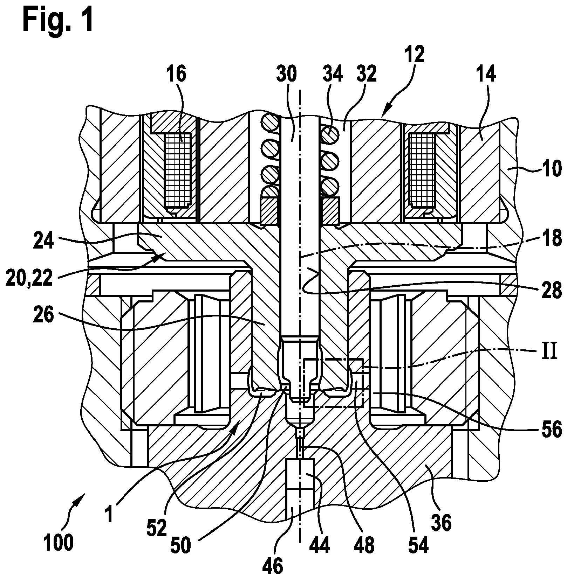

Der in der Fig. 1 ausschnittsweise dargestellte Kraftstoffinjektor 100 dient dem Einspritzen von Kraftstoff in einen nicht gezeigten Brennraum einer selbstzündenden Brennkraftmaschine, wobei der Systemdruck des in einem Rail gespeicherten Kraftstoffes vorzugsweise mehr als 2000 bar betragen kann.

Der Kraftstoffinjektor 100 weist ein Injektorgehäuse 10 auf, in dem ein Elektromagnet 12 ortsfest angeordnet ist. Der Elektromagnet 12 weist einen Magnetkern 14 auf, in dem eine ringförmige Magnetspule 16 angeordnet ist. Bei einer Bestromung der Magnetspule 16 wird ein Magnetfeld aufgebaut, das einen in einer Längsachse 18 hubbeweglichen Magnetanker 20, der gleichzeitig als Ventilelement 22 dient, anzieht und ihn bis zur zumindest mittelbaren Anlage an dem Magnetkern 14 auf diesen zubewegt. In der Darstellung der Figuren ist der Magnetanker 20 in einer Position dargestellt, bei der die Magnetspule 16 jeweils nicht bestromt ist.

Der Magnetanker 20, der im Ausführungsbeispiel einstückig ausgebildet ist, weist einen plattenförmigen Bereich 24 und einen hülsenförmigen Bereich 26 auf. Weiterhin weist der Magnetanker 20 eine koaxial zur Längsachse 18 angeordnete Durchgangsbohrung 28 auf, in der ein ortsfest angeordneter Führungsstift 30, der insbesondere der radialen Lagerung des Magnetankers 20 dient, im Injektorgehäuse 10 angeordnet ist. Mittels einer in einer Ausnehmung 32 der Magnetspule 16 angeordneten Schließfeder 34 wird eine auf den Magnetanker 20 bzw. das Ventilelement 22 wirkende Druckkraft erzeugt, die bei nicht bestromter Magnetspule 16 den Magnetanker 20 von der Magnetspule 16 weg in Richtung einer Schließstellung eines Steuerventils 1 drückt.

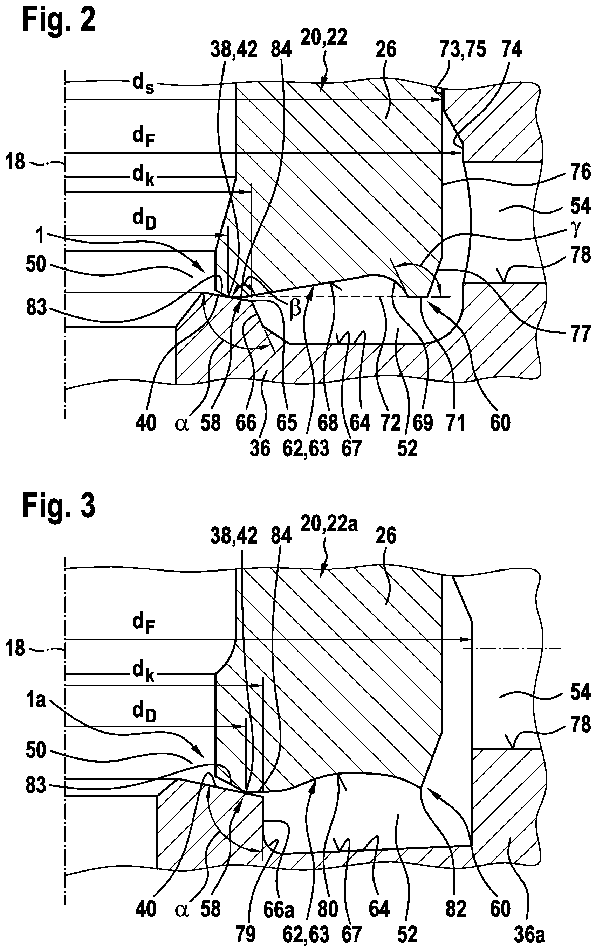

Das der Magnetspule 16 abgewandte Ende des hülsenförmigen Bereichs 26 des Magnetankers 20 wirkt mit einem Ventilkörper 36 zusammen, der als Bestandteil des Steuerventils 1 ortsfest im Injektorgehäuse 10 angeordnet ist. Insbesondere ist auf der der Magnetspule 16 abgewandten Stirnseite des Magnetankers 20 bzw. des Ventilelements 22 ein Ventilsitz 38 ausgebildet, der im Bereich einer an dem Ventilkörper 36 ausgebildeten kegelförmigen Sitzfläche 40 bei nicht bestromter Magnetspule 16 einen Dichtsitz 42 ausbildet (Fig. 2).

In dem Ventilkörper 36 ist ein Steuerraum 44 ausgebildet, in den das wenigstens einer Einspritzöffnung abgewandte Ende einer Düsennadel 46 eintaucht, die gleichzeitig den Steuerraum 44 begrenzt. Der Steuerraum 44 ist über einen Strömungskanal 48 mit integrierter Abströmdrossel mit einem Ventilraum 50 verbunden, der bereichsweise im Ventilkörper 36 und bereichsweise im radialen Zwischenraum zwischen dem Führungsstift 30 und dem hülsenförmigen Bereich 26 des Magnetankers 20 ausgebildet ist.

Bei einer Bestromung der Magnetspule 16 hebt der Magnetanker 20 bzw. das Ventilelement 22 von dem Dichtsitz 42 ab und gibt eine Absteuerverbindung 52 frei, über die Kraftstoff aus dem Steuerraum 44 und den Strömungskanal 48 sowie mehrere, vorzugsweise in gleichgroßen Winkelabständen um die Längsachse 18 angeordnete Radialbohrungen 54 in einen Niederdruckraum 56 des Kraftstoffinjektors 100 abströmen kann. Durch den Abfluss von Druckmittel bzw. Kraftstoff aus dem Steuerraum 44 in den Niederdruckraum 56 wird der auf die Düsennadel 46 in ihre die wenigstens eine Einspritzöffnung verschließende Stellung wirkende hydraulische Druck reduziert, um dadurch bei freigegebenen Einspritzöffnungen Kraftstoff aus dem Kraftstoffinjektor 100 in den Brennraum der Brennkraftmaschine einspritzen zu können.

Wie am besten anhand der Fig. 2 erkennbar ist, ist im Bereich des Dichtsitzes 42 ein erster Drosselspalt 58 sowie im Übergangsbereich zwischen dem Ventilelement 22 zu den Radialbohrungen 56 ein zweiter, stets geöffneter Drosselspalt 60 ausgebildet. Weiterhin erkennt man, dass im radialen Zwischenbereich zwischen den beiden Drosselspalten 58, 60 an der Stirnfläche 62 des Ventilelements 22 eine erste ringnutförmige bzw. muldenartige Vertiefung 63 sowie am Grund der Bohrung des Ventilkörpers 36 eine zweite ringnutförmige bzw. muldenartige Vertiefung 64 ausgebildet ist. Die zweite ringnutförige Vertiefung 64 ist auf der dem Ventilsitz 38 bzw. dem Dichtsitz 42 zugewandten Seite von einer radial umlaufenden Kante 65 begrenzt, die auf der der Sitzfläche 40 abgewandten Seite in eine bereichsweise kegelförmige Seitenwand 66 der zweiten ringnutförmigen Vertiefung 64 übergeht. Ein zwischen der Sitzfläche 40 und der Seitenwand 66 ausgebildeter Kantenwinkel α beträgt weniger als 130 Grad. Weiterhin beträgt der Durchmesser d_{K} der radial umlaufenden Kante 65 maximal 120 % des Durchmessers d_{D} im Bereich des Dichtsitzes 42.

Während ein Grund 67 der zweiten ringnutförmigen Vertiefung 64 eben bzw. senkrecht zur Längsachse 18 angeordnet ist, weist die erste ringnutförmige Vertiefung 63 an dem Ventilelement 22 auf der dem Dichtsitz 42 zugewandten Seite eine gegenüber in einer senkrecht zur Längsachse 18 verlaufenden Ebene schräg angeordnete kegelförmig sowie ringförmig ausgebildete Fläche 68 auf, derart, dass sich der Abstand zwischen den beiden ringnutförmigen Vertiefungen 63, 64 in radialer Richtung von der Längsachse 18 betrachtet vergrößert. Dabei weist die mit der Fläche 40 am Ventillkörper 36 zusammenwirkende Stirnseite des Magnetankers 20 bzw. Ventilelements 22 zwei in einem Winkel zueinander angeordnete Flächenabschnitte 83, 84 auf, die im Übergangsbereich bzw. Knickbereich den Ventilsitz 38 bilden. Ein zwischen der Fläche 68 und dem Flächenabschnitt 84 ausgebildeter stumpfer Winkel β beträgt mehr als 150 Grad.

Die Fläche 68 geht auf der dem Dichtsitz 42 abgewandten Seite in einen konkaven Bereich 69 über. Der konkav ausgebildete Bereich 69 geht wiederum in eine radial umlaufende, ebene Ventilstirnfläche 71 über, wobei ein Kantenwinkel γ zwischen der Ventilstirnfläche 71 und dem konkav ausgebildeten Bereich weniger als 130 Grad beträgt. Wie man ferner anhand der Hilfslinie 72 in der Fig. 2 erkennt, befindet sich die Ventilstirnfläche 71 in Richtung der Längsachse 18 betrachtet auf derselben Höhe wie der Ventilsitz 38 am Ventilelement 22 zur Ausbildung des Dichtsitzes 42.

Zur Aufnahme bzw. radialen Führung des Ventilelements 22 weist der Ventilkörper 36 eine sacklochförmige Bohrung 73 auf, die einen als Führungsfreistich 74 dienenden Abschnitt mit einem Freistichdurchmesser d_{F} aufweist, der maximal 10% oder 0,2mm größer ist als der Durchmesser ds der Bohrung 73 im Bereich eines Führungsabschnitts 75. Weiterhin weist das Ventilelement 22 im Bereich des Führungsfreistichs 74 eine radial umlaufende Wand 76 auf, die über eine Fase 77 in die Ventilstirnfläche 71 übergeht.

Anhand der Fig. 2 ist darüber hinaus erkennbar, dass die Radialbohrungen 54 in Richtung der Längsachse 18 betrachtet bei geschlossenem Ventilelement 22, d.h. bei einer Ausbildung des Dichtsitzes 42, oberhalb der Stirnseite bzw. der Ventilstirnfläche 71 des Ventilelements 22 angeordnet sind, wobei die untere Begrenzung 78 der Radialbohrung 54 sich in Höhe der Fase 77 oder vorzugsweise darüber befindet.

Das in der Fig. 3 dargestellte Steuerventil 1a unterscheidet sich von dem Steuerventil 1 entsprechend der Darstellung der Fig. 2 dadurch, dass die Seitenwand 66a an dem Ventilkörper 36a über einen gerundet ausgebildeten Übergang 79 in den Grund 67 übergeht. Weiterhin weist die erste ringnutförmige Vertiefung 63a an dem Ventilelement 22a anstelle der schräg angeordneten Fläche 68 eine konkav ausgebildete Fläche 80 auf, die unmittelbar in eine radial umlaufende Ventilstirnkante 82 übergeht, die sich in Richtung der Längsachse 18 betrachtet beispielhaft auf derselben Höhe befindet wie der Ventilsitz 38.

## Patentansprüche

1. Kraftstoffinjektor (100), mit einem in einem Gehäuse (10) angeordneten, von einem Elektromagneten (12) betätigbaren Steuerventil (1; 1a) zur Steuerung des Abflusses von Druckmittel aus einem Steuerraum (44) in einen Niederdruckraum (56), wobei das Steuerventil (1; 1a) ein von dem Elektromagneten (12) in Richtung einer Längsachse (18) bewegbares Ventilelement (22; 22a) aufweist, wobei an dem Ventilelement (22; 22a) ein mit dem Steuerraum (44) verbundener Ventilraum (50) angrenzt und das Ventilelement (22; 22a) zum Öffnen und Schließen einer den Ventilraum (50) und den Niederdruckraum (56) verbindenden Absteuerverbindung (52) mit einer an einem Ventilkörper (36; 36a) ausgebildeten Sitzfläche (40) zusammenwirkt, und wobei eine Stirnfläche (62) des Ventilelements (22; 22a) eine erste ringnutförmige Vertiefung (63; 63a) und das Ventilkörper (36; 36a) eine zweite ringnutförmige Vertiefung (64) aufweist, wobei die zweite ringnutförmige Vertiefung (64) auf der der Sitzfläche (40) zugewandten Seite von einer radial umlaufenden Kante (65) begrenzt ist, die eine kegelförmige Seitenwand (66; 66a) der zweiten ringnutförmigen Vertiefung (64) mit der radial innerhalb der Kante (65) verlaufenden kegelförmigen Sitzfläche (40) verbindet, und wobei im Übergangsbereich zwischen der Seitenwand (66; 66a) und der Sitzfläche (40) ein Kantenwinkel (α) von weniger 130 Grad ausgebildet ist, und wobei der Durchmesser (d_{K}) im Bereich der Kante (65) maximal 120 % des Durchmessers (d_{D}) im Bereich eines Dichtsitzes (42) beträgt,
**dadurch gekennzeichnet,**
**dass** die erste ringnutförmige Vertiefung (63) an dem Ventilelement (22) eine kegelförmige Fläche (68) aufweist, dass das Ventilelement (22; 22a) im Bereich des Ventilsitzes (38) einen Flächenabschnitt (84) aufweist, der in die Fläche (68) übergeht, dass zwischen dem Flächenabschnitt (84) und der Fläche (68) ein stumpfer Winkel (β) ausgebildet ist, so dass sich der Abstand zwischen den beiden ringnutförmigen Vertiefungen (63, 64) in radialer Richtung von einer Längsachse (18) des Ventilelements (22) betrachtet vergrößert, und dass die kegelförmige Fläche (68) auf der einem Ventilsitz (38) am Ventilelement (22) abgewandten Seite in einen konkav ausgebildeten Bereich (69) übergeht.

2. Kraftstoffinjektor nach Anspruch 1,
**dadurch gekennzeichnet,**
**dass** der konkav ausgebildete Bereich (69) in eine radial umlaufende, ebene Ventilstirnfläche (71) übergeht, und dass ein Kantenwinkel (γ) im Übergangsbereich zwischen der Ventilstirnfläche (71) und dem konkav ausgebildeten Bereich (69) weniger als 130 Grad beträgt.

3. Kraftstoffinjektor nach Anspruch 1 oder 2,
**dadurch gekennzeichnet,**
**dass** der stumpfe Winkel (β) mehr als 150 Grad beträgt.

4. Kraftstoffinjektor nach Anspruch 1,
**dadurch gekennzeichnet,**
**dass** die erste ringnutförmige Vertiefung (63a) an dem Ventilelement (22a) radial außerhalb eines Dichtsitzes (42) und radial im Bereich der zweiten ringnutförmigen Vertiefung (64) eine konkav ausgebildete Fläche (80) aufweist, die auf dem Dichtsitz (42) radial abgewandten Seite in eine eine radial umlaufende Ventilstirnkante (82) übergeht.

5. Kraftstoffinjektor nach einem der Ansprüche 2 bis 4,
**dadurch gekennzeichnet,**
**dass** die Ventilstirnfläche (71) oder die Ventilstirnkante (82) sich in Richtung einer Längsachse (18) des Ventilelements (22; 22a) betrachtet auf derselben Höhe befindet wie ein Dichtsitz (42) im Bereich des Ventilsitzes (38).

6. Kraftstoffinjektor nach einem der Ansprüche 1 bis 5,
**dadurch gekennzeichnet,**
**dass** das Ventilstück (36; 36a) einen Führungsfreistich (74) mit einem Freistichdurchmesser (d_{F}) aufweist, der maximal 10 % oder 0,2 mm größer ist als der Durchmesser (ds) im Bereich eines Führungsabschnitts (75) für das Ventilelement (22; 22a).

7. Kraftstoffinjektor nach Anspruch 6,
**dadurch gekennzeichnet,**
**dass** das Ventilelement (22; 22a) im Bereich des Führungsfreistichs (74) eine radial umlaufende Wand (76) aufweist, die auf der der zweiten ringnutförmigen Vertiefung (64) zugewandten Seite über eine Fase (77) in die Stirnseite des Ventilelements (22; 22a) übergeht, wobei der Durchmesser (ds) im Bereich eines Führungsabschnitts (75) durch die Fase (77) um maximal 5 % verringert ist.

8. Kraftstoffinjektor nach einem der Ansprüche 1 bis 7,
**dadurch gekennzeichnet,**
**dass** an dem Ventilstück (36; 36a) mehrere, vorzugsweise wenigstens drei, in gleichmäßigen Winkelabständen um eine Längsachse (18) angeordnete Radialbohrungen (54) ausgebildet sind, und dass die Radialbohrungen (54) in Richtung der Längsachse (18) betrachtet bei geschlossenem Ventilelement (22; 22a) oberhalb des stirnseiten, radial äußeren Endes des Ventilelements (22; 22a) angeordnet sind.

9. Kraftstoffinjektor nach einem der Ansprüche 1 bis 8,
**dadurch gekennzeichnet,**
**dass** das Ventilelement (22; 22a) Teil eines Magnetankers (20) ist, und dass der Magnetanker (20) eine Durchgangsbohrung (28) aufweist, in der ein der radialen Führung des Magnetankers (20) dienender Führungsstift (30) angeordnet ist.

10. Kraftstoffinjektor nach einem der Ansprüche 1 bis 9,
**dadurch gekennzeichnet,**
**dass** im Bereich der Absteuerverbindung (52) ein dem Ventilraum (50) benachbarter erster Drosselspalt (58) ausgebildet ist, und dass ein zweiter Drosselspalt (60) in der Absteuerverbindung (52) benachbart zum Niederdruckraum (56) vorgesehen ist.

## Claims

1. Fuel injector (100), having a control valve (1; 1a) which is arranged in a housing (10) and which is actuatable by an electromagnet (12) and which serves for controlling the outflow of pressure medium from a control chamber (44) into a low-pressure chamber (56), wherein the control valve (1; 1a) has a valve element (22; 22a) which is movable by the electromagnet (12) in the direction of a longitudinal axis (18), wherein the valve element (22; 22a) is adjoined by a valve chamber (50) which is connected to the control chamber (44), and the valve element (22; 22a) interacts with a seat surface (40), which is formed on a valve body (36; 36a), in order to open and close a spill connection (52) which connects the valve chamber (50) and the low-pressure chamber (56), and wherein an end surface (62) of the valve element (22; 22a) has a first annular-groove-like depression (63; 63a) and the valve body (36; 36a) has a second annular-groove-like depression (64), wherein the second annular-groove-like depression (64) is delimited, on the side facing towards the seat surface (40), by a radially encircling edge (65) which connects a conical side wall (66; 66a) of the second annular-groove-like depression (64) to the conical seat surface (40) running radially within the edge (65), and wherein an edge angle (α) of less than 130 degrees is formed in the transition region between the side wall (66; 66a) and the seat surface (40), and wherein the diameter (d_{K}) in the region of the edge (65) is at most 120% of the diameter (d_{D}) in the region of a sealing seat (42),
**characterized**
**in that** the first annular-groove-like depression (63) on the valve element (22) has a conical surface (68), in that the second valve element (22; 22a) has, in the region of the valve seat (38), a surface section (84) which transitions into the surface (68), in that an obtuse angle (β) is formed between the surface section (84) and the surface (68) such that the spacing between the two annular-groove-like depressions (63, 64) increases in a radial direction as viewed from a longitudinal axis (18) of the valve element (22), and in that the conical surface (68) transitions, on the side averted from a valve seat (38) on the valve element (22), into a concave region (69) .

2. Fuel injector according to Claim 1,
**characterized**
**in that** the concave region (69) transitions into a radially encircling planar valve end surface (71), and in that an edge angle (γ) in the transition region between the valve end surface (71) and the concave region (69) is less than 130 degrees.

3. Fuel injector according to Claim 1 or 2,
**characterized**
**in that** the obtuse angle (β) is more than 150 degrees.

4. Fuel injector according to Claim 1,
**characterized**
**in that** the first annular-groove-like depression (63a) on the valve element (22a) has, radially outside a sealing seat (42) and radially in the region of the second annular-groove-like depression (64), a concave surface (80) which, on the side radially averted from the sealing seat (42), transitions into a radially encircling valve end edge (82).

5. Fuel injector according to any one of Claims 2 to 4,
**characterized**
**in that** the valve end surface (71) or the valve end edge (82) is, as viewed in the direction of a longitudinal axis (18) of the valve element (22; 22a), situated at the same level as a sealing seat (42) in the region of the valve seat (38).

6. Fuel injector according to any one of Claims 1 to 5,
**characterized**
**in that** the valve piece (36; 36a) has a guide recess (74) with a recess diameter (d_{F}) which is at most 10% or 0.2 mm greater than the diameter (d_{S}) in the region of a guide section (75) for the valve element (22; 22a).

7. Fuel injector according to Claim 6,
**characterized**
**in that** the valve element (22; 22a) has a radially encircling wall (76) in the region of the guide recess (74), which wall (76) transitions, on the side facing towards the second annular-groove-like depression (64), into the end side of the valve element (22; 22a) via a chamfer (77), wherein the diameter (d_{S}) in the region of a guide section (75) is reduced by at most 5% by the chamfer (77).

8. Fuel injector according to any one of Claims 1 to 7,
**characterized**
**in that**, on the valve piece (36; 36a), there are formed multiple, preferably at least three, radial bores (54) which are arranged at uniform angular intervals about a longitudinal axis (18), and in that, as viewed in the direction of the longitudinal axis (18) when the valve element (22; 22a) is closed, the radial bores (54) are arranged above the radially outer face end of the valve element (22; 22a) .

9. Fuel injector according to any one of Claims 1 to 8,
**characterized**
**in that** the valve element (22; 22a) is part of a magnet armature (20), and in that the magnet armature (20) has a passage bore (28) in which there is arranged a guide pin (30) which serves for radially guiding the magnet armature (20).

10. Fuel injector according to any one of Claims 1 to 9,
**characterized**
**in that**, in the region of the spill connection (52), there is formed a first throttle gap (58) which is adjacent to the valve chamber (50), and in that a second throttle gap (60) is provided in the spill connection (52) adjacent to the low-pressure chamber (56) .

## Revendications

1. Injecteur de carburant (100), comportant une soupape de commande (1 ; 1a) disposée dans un boîtier (10) et pouvant être actionnée par un électroaimant (12) pour la commande de l'évacuation de fluide sous pression d'une chambre de commande (44) dans une chambre basse pression (56), la soupape de commande (1 ; 1a) comprenant un élément de soupape (22 ; 22a) déplaçable dans la direction d'un axe longitudinal (18) par l'électroaimant (12), une chambre de soupape (50) raccordée à la chambre de commande (44) étant adjacente à l'élément de soupape (22 ; 22a) et l'élément de soupape (22 ; 22a) coopérant avec une surface de siège (40) formée sur un corps de soupape (36 ; 36a) pour l'ouverture et la fermeture d'un raccord de fin de commande (52) raccordant la chambre de soupape (50) et la chambre basse pression (56), et une surface frontale (62) de l'élément de soupape (22 ; 22a) comprenant un premier évidement (63 ; 63a) en forme de rainure annulaire et le corps de soupape (36 ; 36a) comprenant un deuxième évidement (64) en forme de rainure annulaire, le deuxième évidement (64) en forme de rainure annulaire étant limité, sur le côté tourné vers la surface de siège (40), par une arête (65) radialement périphérique qui raccorde une paroi latérale (66 ; 66a) conique du deuxième évidement (64) en forme de rainure annulaire à la surface de siège (40) conique s'étendant radialement à l'intérieur de l'arête (65), et, dans la région de transition entre la paroi latérale (66 ; 66a) et la surface de siège (40), un angle d'arête (α) inférieur à 130 degrés étant formé, et le diamètre (d_{K}) dans la région de l'arête (65) valant au maximum 120 % du diamètre (d_{D}) dans la région d'un siège d'étanchéité (42),
**caractérisé en ce que**
le premier évidement (63) en forme de rainure annulaire sur l'élément de soupape (22) comprend une surface conique (68), **en ce que** l'élément de soupape (22 ; 22a) comprend, dans la région du siège de soupape (38), une partie de surface (84) qui se prolonge dans la surface (68), **en ce qu'**un angle obtus (β) est formé entre la partie de surface (84) et la surface (68), de sorte que la distance entre les deux évidements (63, 64) en forme de rainures, considérée dans la direction radiale à partir d'un axe longitudinal (18) de l'élément de soupape (22), augmente, et **en ce que** la surface conique (68) se prolonge dans une région (69) formée de manière concave sur le côté opposé à un siège de soupape (38) sur l'élément de soupape (22).

2. Injecteur de carburant selon la revendication 1, **caractérisé en ce que**
la région (69) formée de manière concave se prolonge dans une surface frontale de soupape (71) plane, radialement périphérique, et **en ce qu'**un angle d'arête (γ) dans la région de transition entre la surface frontale de soupape (71) et la région (69) formée de manière concave vaut moins de 130 degrés.

3. Injecteur de carburant selon la revendication 1 ou 2,
**caractérisé en ce que**
l'angle obtus (β) vaut plus de 150 degrés.

4. Injecteur de carburant selon la revendication 1, **caractérisé en ce que**
le premier évidement (63a) en forme de rainure annulaire sur l'élément de soupape (22a) comprend, radialement à l'extérieur d'un siège d'étanchéité (42) et radialement dans la région du deuxième évidement (64) en forme de rainure annulaire, une surface (80) formée de manière concave, qui se prolonge dans une arête frontale de soupape (82) radialement périphérique sur le côté opposé radialement au siège de soupape (42).

5. Injecteur de carburant selon l'une des revendications 2 à 4,
**caractérisé en ce que**
la surface frontale de soupape (71) ou l'arête frontale de soupape (82), considérée dans la direction d'un axe longitudinal (18) de l'élément de soupape (22 ; 22a), se situe à la même hauteur qu'un siège d'étanchéité (42) dans la région du siège de soupape (38).

6. Injecteur de carburant selon l'une des revendications 1 à 5,
**caractérisé en ce que**
la pièce de soupape (36 ; 36a) comprend un dégagement de guidage (74) présentant un diamètre de dégagement (d_{F}) qui est au maximum supérieur de 10 % ou 0,2 mm au diamètre (ds) dans la région d'une partie de guidage (75) pour l'élément de soupape (22 ; 22a).

7. Injecteur de carburant selon la revendication 6, **caractérisé en ce que**
l'élément de soupape (22 ; 22a) comprend, dans la région du dégagement de guidage (74), une paroi (76) radialement périphérique qui, sur le côté tourné vers le deuxième évidement (64) en forme de rainure annulaire, se prolonge dans le côté frontal de l'élément de soupape (22 ; 22a) par le biais d'un biseau (77), le diamètre (ds) dans la région d'une partie de guidage (75) étant réduit d'au maximum 5 % par le biseau (77).

8. Injecteur de carburant selon l'une des revendications 1 à 7,
**caractérisé en ce que**
plusieurs, de préférence au moins trois alésage radiaux (54) disposés à des distances angulaires régulières autour d'un axe longitudinal (18) sont formés sur la pièce de soupape (36 ; 36a), et **en ce que** les alésages radiaux (54), considérés dans la direction de l'axe longitudinal (18), sont disposés au-dessus de l'extrémité radialement extérieure, côté frontal, de l'élément de soupape (22 ; 22a) lorsque l'élément de soupape (22 ; 22a) est fermé.

9. Injecteur de carburant selon l'une des revendications 1 à 8,
**caractérisé en ce que**
l'élément de soupape (22 ; 22a) fait partie d'une armature magnétique (20), et **en ce que** l'armature magnétique (20) comprend un alésage traversant (28) dans lequel est disposée une goupille de guidage (30) servant au guidage radial de l'armature magnétique (20).

10. Injecteur de carburant selon l'une des revendications 1 à 9,
**caractérisé en ce**
**qu'**une première fente d'étranglement (58) adjacente à la chambre de soupape (50) est formée dans la région du raccord de fin de commande (52), et **en ce qu'**une deuxième fente d'étranglement (60) est prévue de manière adjacente à la chambre basse pression (56) dans le raccord de fin de commande (52).
